# EUROPEAN PATENT APPLICATION

(11) **EP 4 700 721 A1**
(43) Date of publication of application: **25.02.2026**
(21) Application number: 23934784.2
(22) Date of filing: 11.07.2023
(51) Int. Cl.: G06V 20/68

(54) **FOOD MATERIAL RECOGNITION METHOD AND APPARATUS, ELECTRONIC DEVICE, AND COMPUTER-READABLE STORAGE MEDIUM**

(30) Priority: 27.04.2023 CN 202310485066
(71) Applicant: Hefei Hualing Co., Ltd., Hefei, Anhui 230601 (CN); Hefei Midea Refrigerator Co., Ltd., Hefei, Anhui 230088 (CN); Midea Group Co., Ltd., Foshan, Guangdong 528311 (CN)
(72) Inventor: JIN, Sheng, Hefei, Anhui 230601 (CN)
(74) Representative: Ran, Handong
(86) International application number: PCT/CN2023/106801
(87) International publication number: WO 2024/221609

(57) **Abstract**

A food material recognition method and apparatus, an electronic device, and a computer-readable storage medium. The method comprises: from a process video about a food material entering/exiting a refrigeration device, capturing multiple consecutive pictures to be recognized; dividing the multiple pictures to be recognized into multiple groups of pictures to be recognized, and performing feature extraction on each group of pictures to be recognized, to obtain first feature information and second feature information corresponding to each group of pictures to be recognized, wherein the first feature information comprises food material time information and the second feature information comprises food material space information; according to the first feature information and the second feature information of each group of pictures to be recognized, obtaining food material information comprising food material category, position and entrance/exit information and corresponding to each group of pictures to be recognized; and determining a final recognition result of a food material according to the food material information corresponding to each group of pictures to be recognized.

## Description

### CROSS-REFERENCE TO RELATED APPLICATIONS

This application claims a priority to Chinese Patent Applications No. 202310485066.3, filed on April 27, 2023 and entitled "FOOD INGREDIENT RECOGNITION METHOD AND APPARATUS, ELECTRONIC DEVICE, AND COMPUTER-READABLE STORAGE MEDIUM", the entire contents of which are incorporated herein by reference.

### FIELD

The present disclosure relates to the field of smart home technologies, and in particular, to a food ingredient recognition method and apparatus, an electronic device, and a computer-readable storage medium.

### BACKGROUND

At present, for action recognition of food ingredients entering and exiting a refrigerator, a two-stage recognition method is mostly adopted, i.e., algorithms such as object detection are used to detect category information and position information of the food ingredients, and then algorithms such as object tracking are used to track movement information of the food ingredients, obtaining entry-exit information of the food ingredients. However, the above method uses a plurality of algorithm models, which is extremely cumbersome to use and affects a real-time speed of food ingredient recognition. Moreover, training different algorithm models is difficult and costly. In addition, since accuracy of the food ingredient recognition is affected by the plurality of algorithm models simultaneously, a barrel effect may occur, resulting in low robustness.

### SUMMARY

The present disclosure aims to solve at least one of the technical problems in the related art to some extent. To this end, a first objective of the present disclosure is to provide a food ingredient recognition method, which enables temporal information and spatial information of food ingredients to be obtained only through feature extraction. Moreover, based on the temporal information and the spatial information of the food ingredients, category information, position information, and entry-exit information of the food ingredients may be obtained simultaneously. In this way, training difficulty, training costs, and complexity of food ingredient recognition are greatly reduced, and a real-time speed of the food ingredient recognition is improved, improving user experience.

A second objective of the present disclosure is to provide a food ingredient recognition apparatus.

A third objective of the present disclosure is to provide an electronic device.

A fourth objective of the present disclosure is to provide a computer-readable storage medium.

To achieve the above objectives, an embodiment of the first aspect of the present disclosure provides a food ingredient recognition method. The method includes: obtaining a process video of food ingredients entering and exiting a refrigeration device, and capturing a plurality of consecutive to-be-recognized images from the process video; dividing the plurality of consecutive to-be-recognized images into a plurality of groups of to-be-recognized images, and performing, for each of the plurality of groups of to-be-recognized images, feature extraction on the group of to-be-recognized images to obtain first feature information and second feature information corresponding to the group of to-be-recognized images, in which the first feature information includes temporal information of the food ingredients, and the second feature information includes spatial information of the food ingredients; obtaining, for each of the plurality of groups of to-be-recognized images, food ingredient information corresponding to the group of to-be-recognized images according to the first feature information and the second feature information corresponding to the group of to-be-recognized images, in which the food ingredient information includes category information, position information, and entry-exit information of the food ingredients; and determining a final recognition result of the food ingredients according to the food ingredient information corresponding to each of the plurality of groups of to-be-recognized images.

With the food ingredient recognition method according to the embodiments of the present disclosure, the process video of the food ingredients entering and exiting the refrigeration device is obtained, and the plurality of consecutive to-be-recognized images is captured from the process video. The plurality of consecutive to-be-recognized images is divided into the plurality of groups of to-be-recognized images. For each of the plurality of groups of to-be-recognized images, the feature extraction is performed on the group of to-be-recognized images to obtain the first feature information and the second feature information corresponding to the group of to-be-recognized images. The first feature information includes the temporal information of the food ingredients, and the second feature information includes the spatial information of the food ingredients. For each of the plurality of groups of to-be-recognized images, the food ingredient information corresponding to the group of to-be-recognized images is obtained according to the first feature information and the second feature information corresponding to the group of to-be-recognized images. The food ingredient information includes the category information, the position information, and the entry-exit information of the food ingredients. The final recognition result of the food ingredients is determined according to the food ingredient information corresponding to each of the plurality of groups of to-be-recognized images. Therefore, compared with a two-stage recognition method, the method according to the present disclosure breaks limitation of a plurality of models, and can obtain the temporal information and the spatial information of the food ingredients only through the feature extraction. Moreover, based on the temporal information and the spatial information of the food ingredients, the category information, the position information, and the entry-exit information of the food ingredients can be obtained simultaneously. In this way, the training difficulty, the training costs, and the complexity of the food ingredient recognition are greatly reduced, and the real-time speed of the food ingredient recognition is improved, improving the user experience.

According to an embodiment of the present disclosure, said performing, for each of the plurality of groups of to-be-recognized images, the feature extraction on the group of to-be-recognized images to obtain the first feature information corresponding to the group of to-be-recognized images includes: performing, for each of the plurality of groups of to-be-recognized images, the feature extraction on the group of to-be-recognized images through a 3D convolutional network model to obtain the first feature information corresponding to the group of to-be-recognized images.

According to an embodiment of the present disclosure, said performing, for each of the plurality of groups of to-be-recognized images, the feature extraction on the group of to-be-recognized images to obtain the second feature information corresponding to the group of to-be-recognized images includes: performing, for each of the plurality of groups of to-be-recognized images, the feature extraction on a last to-be-recognized image in the group of to-be-recognized images through a 2D convolutional network model to obtain the second feature information corresponding to the group of to-be-recognized images.

According to an embodiment of the present disclosure, said obtaining, for each of the plurality of groups of to-be-recognized images, the food ingredient information corresponding to the group of to-be-recognized images according to the first feature information and the second feature information corresponding to the group of to-be-recognized images includes: performing, for each of the plurality of groups of to-be-recognized images, feature fusion on the first feature information and the second feature information corresponding to the group of to-be-recognized images to obtain fused feature information corresponding to the group of to-be-recognized images; and obtaining, for each of the plurality of groups of to-be-recognized images, the food ingredient information corresponding to the group of to-be-recognized images according to the fused feature information corresponding to the group of to-be-recognized images.

According to an embodiment of the present disclosure, said obtaining, for each of the plurality of groups of to-be-recognized images, the food ingredient information corresponding to the group of to-be-recognized images according to the fused feature information corresponding to the group of to-be-recognized images includes: inputting, for each of the plurality of groups of to-be-recognized images, the fused feature information corresponding to the group of to-be-recognized images into a pre-trained food ingredient recognition model to obtain the food ingredient information corresponding to the group of to-be-recognized images. The food ingredient recognition model is obtained based on training samples labeled with category information, position information, and entry-exit information of food ingredients corresponding to a plurality of sample images.

According to an embodiment of the present disclosure, the method further includes following operations for training the food ingredient recognition model: calculating a first loss value of the food ingredient recognition model through a predetermined cross-entropy loss function; and adjusting a first parameter of the food ingredient recognition model according to the first loss value. The first parameter is configured to adjust first output of the food ingredient recognition model. The first output includes the category information and the entry-exit information of the food ingredients.

According to an embodiment of the present disclosure, the method further includes following operations for training the food ingredient recognition model: calculating a second loss value of the food ingredient recognition model through a predetermined intersection-over-union regression loss function; and adjusting a second parameter of the food ingredient recognition model according to the second loss value. The second parameter is configured to adjust second output of the food ingredient recognition model. The second output includes the position information of the food ingredients.

To achieve the above objectives, an embodiment of the second aspect of the present disclosure provides a food ingredient recognition apparatus. The apparatus includes: a first obtaining module configured to obtain a process video of food ingredients entering and exiting a refrigeration device, and capture a plurality of consecutive to-be-recognized images from the process video; an extraction module configured to divide the plurality of consecutive to-be-recognized images into a plurality of groups of to-be-recognized images, and perform, for each of the plurality of groups of to-be-recognized images, feature extraction on the group of to-be-recognized images to obtain first feature information and second feature information corresponding to the group of to-be-recognized images, in which the first feature information includes temporal information of the food ingredients, and the second feature information includes spatial information of the food ingredients; a second obtaining module configured to obtain, for each of the plurality of groups of to-be-recognized images, food ingredient information corresponding to the group of to-be-recognized images according to the first feature information and the second feature information corresponding to the group of to-be-recognized images, in which the food ingredient information includes category information, position information, and entry-exit information of the food ingredients; and a determination module configured to determine a final recognition result of the food ingredients according to the food ingredient information corresponding to each of the plurality of groups of to-be-recognized images.

With the food ingredient recognition apparatus according to the embodiments of the present disclosure, the first obtaining module is configured to obtain the process video of the food ingredients entering and exiting the refrigeration device, and capture the plurality of consecutive to-be-recognized images from the process video. The extraction module is configured to divide the plurality of consecutive to-be-recognized images into the plurality of groups of to-be-recognized images, and perform, for each of the plurality of groups of to-be-recognized images, the feature extraction on the group of to-be-recognized images to obtain the first feature information and the second feature information corresponding to the group of to-be-recognized images. The first feature information includes the temporal information of the food ingredients, and the second feature information includes the spatial information of the food ingredients. The second obtaining module is configured to obtain, for each of the plurality of groups of to-be-recognized images, the food ingredient information corresponding to the group of to-be-recognized images according to the first feature information and the second feature information corresponding to the group of to-be-recognized images. The food ingredient information includes the category information, the position information, and the entry-exit information of the food ingredients. The determination module is configured to determine the final recognition result of the food ingredients according to the food ingredient information corresponding to each of the plurality of groups of to-be-recognized images. Therefore, compared with the two-stage recognition method, the limitation of the plurality of models is broken, and the temporal information and the spatial information of the food ingredients can be obtained only through the feature extraction. Moreover, based on the temporal information and the spatial information of the food ingredients, the category information, the position information, and the entry-exit information of the food ingredients can be obtained simultaneously. In this way, the training difficulty, the training costs, and the complexity of the food ingredient recognition are greatly reduced, and the real-time speed of the food ingredient recognition is improved, improving the user experience.

According to an embodiment of the present disclosure, the extraction module is specifically configured to: perform, for each of the plurality of groups of to-be-recognized images, the feature extraction on the group of to-be-recognized images through a 3D convolutional network model to obtain the first feature information corresponding to the group of to-be-recognized images.

According to an embodiment of the present disclosure, the extraction module is specifically configured to: perform, for each of the plurality of groups of to-be-recognized images, the feature extraction on a last to-be-recognized image in the group of to-be-recognized images through a 2D convolutional network model to obtain the second feature information corresponding to the group of to-be-recognized images.

According to an embodiment of the present disclosure, the second obtaining module is specifically configured to: perform, for each of the plurality of groups of to-be-recognized images, feature fusion on the first feature information and the second feature information corresponding to the group of to-be-recognized images to obtain fused feature information corresponding to the group of to-be-recognized images; and obtain, for each of the plurality of groups of to-be-recognized images, the food ingredient information corresponding to the group of to-be-recognized images according to the fused feature information corresponding to the group of to-be-recognized images.

According to an embodiment of the present disclosure, the second obtaining module is specifically configured to: input, for each of the plurality of groups of to-be-recognized images, the fused feature information corresponding to the group of to-be-recognized images into a pre-trained food ingredient recognition model to obtain the food ingredient information corresponding to the group of to-be-recognized images. The food ingredient recognition model is obtained based on training samples labeled with category information, position information, and entry-exit information of food ingredients corresponding to a plurality of sample images.

According to an embodiment of the present disclosure, the food ingredient recognition apparatus further includes a training module. The training module is configured to: calculate a first loss value of the food ingredient recognition model through a predetermined cross-entropy loss function; and adjust a first parameter of the food ingredient recognition model according to the first loss value. The first parameter is configured to adjust first output of the food ingredient recognition model. The first output includes the category information and the entry-exit information of the food ingredients.

According to an embodiment of the present disclosure, the training module is further configured to: calculate a second loss value of the food ingredient recognition model through a predetermined intersection-over-union regression loss function; and adjust a second parameter of the food ingredient recognition model according to the second loss value. The second parameter is configured to adjust second output of the food ingredient recognition model. The second output includes the position information of the food ingredients.

To achieve the above objectives, an embodiment of the third aspect of the present disclosure provides an electronic device. The electronic device includes: a memory configured to store a program; and a processor configured to execute the program stored in the memory to implement the food ingredient recognition method according to the embodiments of the first aspect.

In the above electronic device, the process video of the food ingredients entering and exiting the refrigeration device is obtained, and the plurality of consecutive to-be-recognized images is captured from the process video. The plurality of consecutive to-be-recognized images is divided into the plurality of groups of to-be-recognized images. For each of the plurality of groups of to-be-recognized images, the feature extraction is performed on the group of to-be-recognized images to obtain the first feature information and the second feature information corresponding to the group of to-be-recognized images. The first feature information includes the temporal information of the food ingredients, and the second feature information includes the spatial information of the food ingredients. For each of the plurality of groups of to-be-recognized images, the food ingredient information corresponding to the group of to-be-recognized images is obtained according to the first feature information and the second feature information corresponding to the group of to-be-recognized images. The food ingredient information includes the category information, the position information, and the entry-exit information of the food ingredients. The final recognition result of the food ingredients is determined according to the food ingredient information corresponding to each of the plurality of groups of to-be-recognized images. Therefore, compared with the two-stage recognition method, the limitation of the plurality of models is broken, and the temporal information and the spatial information of the food ingredients can be obtained only through the feature extraction. Moreover, based on the temporal information and the spatial information of the food ingredients, the category information, the position information, and the entry-exit information can be obtained simultaneously. In this way, the training difficulty, the training costs, and the complexity of the food ingredient recognition are greatly reduced, and the real-time speed of the food ingredient recognition is improved, improving the user experience.

To achieve the above objectives, an embodiment of the fourth aspect of the present disclosure provides a computer-readable storage medium, having a program stored thereon. The program, when executed by a processor, implements the food ingredient recognition method according to the embodiments of the first aspect.

In the above computer-readable storage medium, the process video of the food ingredients entering and exiting the refrigeration device is obtained, and the plurality of consecutive to-be-recognized images is captured from the process video. The plurality of consecutive to-be-recognized images is divided into the plurality of groups of to-be-recognized images. For each of the plurality of groups of to-be-recognized images, the feature extraction is performed on the group of to-be-recognized images to obtain the first feature information and the second feature information corresponding to the group of to-be-recognized images. The first feature information includes the temporal information of the food ingredients, and the second feature information includes the spatial information of the food ingredients. For each of the plurality of groups of to-be-recognized images, the food ingredient information corresponding to the group of to-be-recognized images is obtained according to the first feature information and the second feature information corresponding to the group of to-be-recognized images. The food ingredient information includes the category information, the position information, and the entry-exit information of the food ingredients. The final recognition result of the food ingredients is determined according to the food ingredient information corresponding to each of the plurality of groups of to-be-recognized images. Therefore, compared with the two-stage recognition method, the limitation of the plurality of models is broken, and the temporal information and the spatial information of the food ingredients can be obtained only through the feature extraction. Moreover, based on the temporal information and the spatial information of the food ingredients, the category information, the position information, and the entry-exit information can be obtained simultaneously. In this way, the training difficulty, the training costs, and the complexity of the food ingredient recognition are greatly reduced, and the real-time speed of the food ingredient recognition is improved, improving the user experience.

Additional aspects and advantages of the present disclosure will be partially provided in the following description, and partially will become obvious from the following description, or will be understood through the practice of the present disclosure.

### BRIEF DESCRIPTION OF THE DRAWINGS

FIG. 1 is a schematic flowchart of a food ingredient recognition method according to a first embodiment of the present disclosure.
FIG. 2 is a schematic flowchart of a food ingredient recognition method according to a second embodiment of the present disclosure.
FIG. 3 is a schematic structural diagram of a food ingredient recognition apparatus according to an embodiment of the present disclosure.
FIG. 4 is a schematic structural diagram of an electronic device according to an embodiment of the present disclosure.

### DETAILED DESCRIPTION

The embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limiting, the present disclosure.

A food ingredient recognition method and apparatus, an electronic device, and a computer-readable storage medium according to the embodiments of the present disclosure are described below with reference to the accompanying drawings.

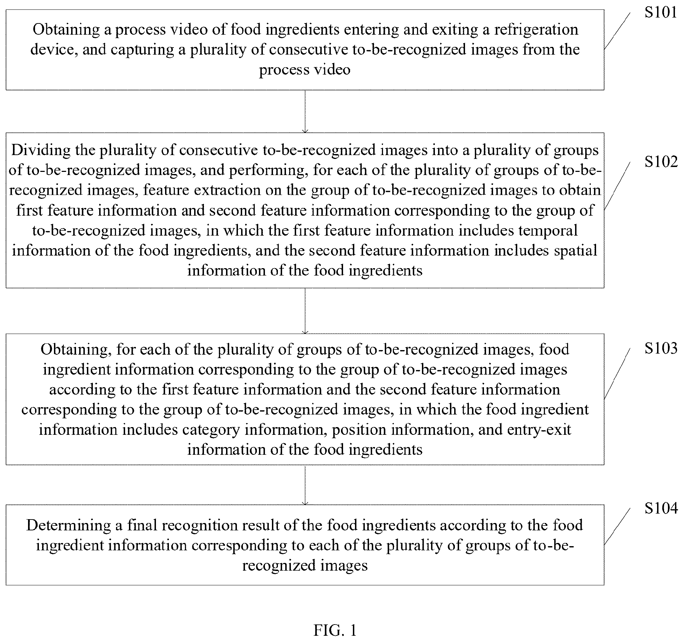

In the present disclosure, referring to FIG. 1, which is a schematic flowchart of a food ingredient recognition method according to a first embodiment of the present disclosure, the food ingredient recognition method provided in this embodiment may include operations at steps S101 to S 104.

At step S101, a process video of food ingredients entering and exiting a refrigeration device is obtained, and a plurality of consecutive to-be-recognized images is captured from the process video.

In some embodiments, the food ingredient recognition method provided in this embodiment may be applied to any device with a processing capability, such as a refrigeration device or a server. The refrigeration device may be a freezer, a refrigerator, a fresh-keeping cabinet, or the like. The embodiments of the present disclosure may take the refrigeration device as the refrigerator for illustration.

In some embodiments, an image capture device disposed inside the refrigeration device may be used to capture a process video of a user storing or taking out the food ingredients from the refrigeration device. In a specific implementation, the image capture device may be mounted near a door frame at a top of the refrigeration device, or at other positions where a process of the food ingredients entering and exiting the refrigeration device may be captured, which is not limited in the embodiments of the present disclosure.

In some embodiments, after the user opens the refrigeration device, the image capture device disposed inside the refrigeration device may capture the process video of the user storing or taking out the food ingredients, and may be controlled to stop capturing after the user closes the refrigeration device.

In some embodiments, when an execution subject of the above food ingredient recognition method is the refrigeration device, the image capture device disposed inside the refrigeration device may transmit the obtained process video to the refrigeration device. When the execution subject of the above food ingredient recognition method is a server, the image capture device disposed inside the refrigeration device may transmit the obtained process video to the server. Alternatively, the image capture device disposed inside the refrigeration device may transmit the obtained process video to the refrigeration device, and then the refrigeration device transmits the process video to the server.

In some embodiments, the plurality of consecutive to-be-recognized images may be captured from the process video according to a predetermined capturing rule. For example, the predetermined capturing rule may be capturing each frame of the process video, or capturing the plurality of to-be-recognized images from the process video at intervals of a predetermined number of frames (such as capturing one to-be-recognized image from the process video every ten frames), or capturing the plurality of to-be-recognized images from the process video at intervals of a predetermined time length (such as capturing ten to-be-recognized images from the process video per second), or the like, which is not limited in the embodiments of the present disclosure. In addition, since a user's action does not change significantly within a short period of time, the plurality of to-be-recognized images captured according to the above predetermined capturing rule may be regarded as consecutive image frames.

At step S102, the plurality of consecutive to-be-recognized images is divided into a plurality of groups of to-be-recognized images. For each of the plurality of groups of to-be-recognized images, feature extraction is performed on the group of to-be-recognized images to obtain first feature information and second feature information corresponding to the group of to-be-recognized images. The first feature information includes temporal information of the food ingredients, and the second feature information includes spatial information of the food ingredients.

In some embodiments, the plurality of consecutive to-be-recognized images may be divided into the plurality of groups of to-be-recognized images according to a predetermined division rule. The number of images in each group of to-be-recognized images may be the same or different. For example, when the number of images in each group of to-be-recognized images is the same, the predetermined division rule may be determining a first to-be-recognized image to a sixteenth to-be-recognized image in chronological order as a first group of to-be-recognized images, a second to-be-recognized image to a seventeenth to-be-recognized image as a second group of to-be-recognized images, and the rest can be done in the same manner. Alternatively, the predetermined division rule may be determining the first to-be-recognized image to a fifteenth to-be-recognized image in chronological order as the first group of to-be-recognized images, a fifth to-be-recognized image to a nineteenth to-be-recognized image as the second group of to-be-recognized images, and the rest can be done in the same manner. Alternatively, the predetermined division rule may be determining the first to-be-recognized image to a tenth to-be-recognized image in chronological order as the first group of to-be-recognized images, an eleventh to-be-recognized image to a twentieth to-be-recognized image as the second group of to-be-recognized images, and the rest can be done in the same manner. Alternatively, when the number of images in each group of to-be-recognized images is different, the predetermined division rule may be determining the first to-be-recognized image to the tenth to-be-recognized image in chronological order as the first group of to-be-recognized images, the second to-be-recognized image to the seventeenth to-be-recognized image as the second group of to-be-recognized images, a third to-be-recognized image to a twenty-first to-be-recognized image as a third group of to-be-recognized images, and the rest can be done in the same manner. Alternatively, the predetermined division rule may be determining the first to-be-recognized image to the tenth to-be-recognized image in chronological order as the first group of to-be-recognized images, the eleventh to-be-recognized image to the seventeenth to-be-recognized image as the second group of to-be-recognized images, an eighteenth to-be-recognized image to a twenty-ninth to-be-recognized image as the third group of to-be-recognized images, and the rest can be done in the same manner.

In some embodiments, for each group of to-be-recognized images, the feature extraction is performed on the group of to-be-recognized images to obtain the first feature information including the temporal information of the food ingredients and corresponding to the group of to-be-recognized images. This first feature information may characterize attributes of the food ingredients within a time interval corresponding to each group of to-be-recognized images during the process of the food ingredients entering or exiting the refrigeration device.

In some embodiments, for each group of to-be-recognized images, the feature extraction is performed on the group of to-be-recognized images to obtain the second feature information including the spatial information of the food ingredients and corresponding to the group of to-be-recognized images. This second feature information may characterize attributes of the food ingredients within a spatial region corresponding to each group of to-be-recognized images during the process of the food ingredients entering or exiting the refrigeration device.

At step S103, for each of the plurality of groups of to-be-recognized images, food ingredient information corresponding to the group of to-be-recognized images is obtained according to the first feature information and the second feature information corresponding to the group of to-be-recognized images. The food ingredient information includes category information, position information, and entry-exit information of the food ingredients.

In some embodiments, for each group of to-be-recognized images, based on the first feature information including the temporal information of the food ingredients and corresponding to the group of to-be-recognized images, temporal correlation between user's food ingredients storage/taking behaviors at different time points corresponding to the group of to-be-recognized images may be obtained. Moreover, for each group of to-be-recognized images, based on the second feature information including the spatial information of the food ingredients and corresponding to the group of to-be-recognized images, spatial correlation between user's food ingredients storage/taking behaviors at different positions corresponding to the group of to-be-recognized images may be obtained. Based on the temporal correlation and the spatial correlation between the user's food ingredients storage/taking behaviors, the category information, the position information, and the entry-exit information of the food ingredients in each group of to-be-recognized images may be obtained.

At step S104, a final recognition result of the food ingredients is determined according to the food ingredient information corresponding to each of the plurality of groups of to-be-recognized images.

In some embodiments, the final recognition result of the food ingredients may be determined based on a predetermined rule and according to the food ingredient information corresponding to each group of to-be-recognized images. For example, it is assumed that there are 100 groups of to-be-recognized images in total. Food ingredient information corresponding to 80 groups of to-be-recognized images is that "the user takes an apple out of the refrigerator". Then, the final recognition result of the food ingredients may be determined as "the apple being taken out of the refrigerator by the user".

With the food ingredient recognition method according to the embodiments of the present disclosure, the process video of the food ingredients entering and exiting the refrigeration device is obtained, and the plurality of consecutive to-be-recognized images is captured from the process video. The plurality of consecutive to-be-recognized images is divided into the plurality of groups of to-be-recognized images. For each of the plurality of groups of to-be-recognized images, the feature extraction is performed on the group of to-be-recognized images to obtain the first feature information and the second feature information corresponding to the group of to-be-recognized images. The first feature information includes the temporal information of the food ingredients, and the second feature information includes the spatial information of the food ingredients. For each of the plurality of groups of to-be-recognized images, the food ingredient information corresponding to the group of to-be-recognized images is obtained according to the first feature information and the second feature information corresponding to the group of to-be-recognized images. The food ingredient information includes the category information, the position information, and the entry-exit information of the food ingredients. The final recognition result of the food ingredients is determined according to the food ingredient information corresponding to each of the plurality of groups of to-be-recognized images. Therefore, compared with a two-stage recognition method, the method according to the present disclosure breaks limitation of a plurality of models, and can obtain the temporal information and the spatial information of the food ingredients only through the feature extraction. Moreover, based on the temporal information and the spatial information of the food ingredients, the category information, the position information, and the entry-exit information of the food ingredients can be obtained simultaneously. In this way, training difficulty, training costs, and complexity of food ingredient recognition are greatly reduced, and a real-time speed of the food ingredient recognition is improved, improving user experience.

In some embodiments, said performing, for each of the plurality of groups of to-be-recognized images, the feature extraction on the group of to-be-recognized images to obtain the first feature information corresponding to the group of to-be-recognized images may include: performing, for each of the plurality of groups of to-be-recognized images, the feature extraction on the group of to-be-recognized images through a 3D convolutional network model to obtain the first feature information corresponding to the group of to-be-recognized images.

In some embodiments, for each group of to-be-recognized images, a feature may be extracted through the 3D convolutional network model from each to-be-recognized image in the group of to-be-recognized images from a temporal dimension to obtain the first feature information corresponding to the group of to-be-recognized images based on the temporal feature information of each to-be-recognized image in the group of to-be-recognized images. In a specific implementation, 3D convolution forms a cube by stacking a plurality of consecutive frames (the plurality of to-be-recognized images in each group of to-be-recognized images), and then applies a 3D convolution kernel in the cube. With this structure, a feature map in this convolution layer is connected to a plurality of adjacent frames in its previous layer, capturing movement information.

In some embodiments, since the 3D convolutional network model is only used to extract a feature from a temporal dimension for each group of to-be-recognized images, lightweight networks such as Shufflenet, Mobilenet, or their variants can be adopted for the 3D convolutional network model.

In the embodiments of the present disclosure, for each of the plurality of groups of to-be-recognized images, the feature extraction is performed on the group of to-be-recognized images through the 3D convolutional network model to obtain the first feature information corresponding to the group of to-be-recognized images. Therefore, the training difficulty, the training costs, and the complexity of the food ingredient recognition can be reduced through the feature extraction from the temporal dimension for each group of to-be-recognized images via a lightweight 3D convolutional network model.

In some embodiments, said performing, for each of the plurality of groups of to-be-recognized images, the feature extraction on the group of to-be-recognized images to obtain the second feature information corresponding to the group of to-be-recognized images includes: performing, for each of the plurality of groups of to-be-recognized images, the feature extraction on a last to-be-recognized image in the group of to-be-recognized images through a 2D convolutional network model to obtain the second feature information corresponding to the group of to-be-recognized images.

In some embodiments, since the last to-be-recognized image in each group of to-be-recognized images contains final spatial information of the food ingredients within the corresponding time interval, it is only necessary to perform the feature extraction on the last to-be-recognized image in each group of to-be-recognized images from a spatial dimension, to obtain second feature information including the final spatial information of the food ingredients in the time interval and corresponding to each group of to-be-recognized images (reducing a calculation amount). In a specific implementation, for each group of to-be-recognized images, the last to-be-recognized image in the group of to-be-recognized images may be determined as a key frame image corresponding to the group of to-be-recognized images, i.e., the feature extraction may be performed on the key frame image corresponding to the group of to-be-recognized images to obtain the second feature information corresponding to the group of to-be-recognized images.

In some embodiments, since the 2D convolutional network model is only used to extract a feature, in the spatial dimension, from the last to-be-recognized image in each group of to-be-recognized images, lightweight networks such as Shufflenet, Mobilenet, or their variants can be adopted for the 2D convolutional network model.

In the embodiments of the present disclosure, for each of the plurality of groups of to-be-recognized images, the feature extraction is performed on the last to-be-recognized image in the group of to-be-recognized images through the 2D convolutional network model to obtain the second feature information corresponding to the group of to-be-recognized images. Therefore, the training difficulty, the training costs, and the complexity of food ingredient recognition can be reduced through the feature extraction from the spatial dimension for the last to-be-recognized image in each group of to-be-recognized images using a lightweight 2D convolutional network model.

In some embodiments, said obtaining, for each of the plurality of groups of to-be-recognized images, the food ingredient information corresponding to the group of to-be-recognized images according to the first feature information and the second feature information corresponding to the group of to-be-recognized images may include: performing, for each of the plurality of groups of to-be-recognized images, feature fusion on the first feature information and the second feature information corresponding to the group of to-be-recognized images to obtain fused feature information corresponding to the group of to-be-recognized images; and obtaining, for each of the plurality of groups of to-be-recognized images, the food ingredient information corresponding to the group of to-be-recognized images according to the fused feature information corresponding to the group of to-be-recognized images.

In some embodiments, the feature fusion may be performed on the first feature information including the temporal information of the food ingredients and the second feature information including the spatial information of the food ingredients. In this way, preliminary fusion can be performed on the temporal information and the spatial information of the food ingredients, which realizes unification of the temporal information and the spatial information, and facilitates obtaining of the food ingredient information through the unified fused feature information.

In the embodiments of the present disclosure, for each of the plurality of groups of to-be-recognized images, the feature fusion is performed on the first feature information and the second feature information corresponding to the group of to-be-recognized images to obtain the fused feature information corresponding to the group of to-be-recognized images. For each of the plurality of groups of to-be-recognized images, the food ingredient information corresponding to the group of to-be-recognized images is obtained according to the fused feature information corresponding to the group of to-be-recognized images. Therefore, the unification of the temporal information and the spatial information can be realized, which facilitates faster obtaining of the food ingredient information through the unified fused feature information, improving the real-time speed of the food ingredient recognition and the user experience.

In some embodiments, said obtaining, for each of the plurality of groups of to-be-recognized images, the food ingredient information corresponding to the group of to-be-recognized images according to the fused feature information corresponding to the group of to-be-recognized images may include: inputting, for each of the plurality of groups of to-be-recognized images, the fused feature information corresponding to the group of to-be-recognized images into a pre-trained food ingredient recognition model to obtain the food ingredient information corresponding to the group of to-be-recognized images. The food ingredient recognition model is obtained based on training samples labeled with category information, position information, and entry-exit information of food ingredients corresponding to a plurality of sample images.

In some embodiments, the pre-trained food ingredient recognition model may be models such as Feature Pyramid Networks (FPN) or a dilated convolution model.

In the embodiments of the present disclosure, for each of the plurality of groups of to-be-recognized images, the fused feature information corresponding to the group of to-be-recognized images is inputted into the pre-trained food ingredient recognition model to obtain the food ingredient information corresponding to the group of to-be-recognized images, which can quickly obtain relatively accurate food ingredient information, improving the real-time speed of the food ingredient recognition and the user experience.

In some embodiments, the food ingredient recognition method may further include following operations for training the food ingredient recognition model: calculating a first loss value of the food ingredient recognition model through a predetermined cross-entropy loss function; and adjusting a first parameter of the food ingredient recognition model according to the first loss value. The first parameter is configured to adjust first output of the food ingredient recognition model. The first output includes the category information and the entry-exit information of the food ingredients.

In some embodiments, the predetermined cross-entropy loss function may be used for measuring a difference between predicted data (such as a category result and an entry-exit result of the food ingredients) and ground truth data. The first loss value of the food ingredient recognition model may be calculated through the predetermined cross-entropy loss function, and the first parameter of the food ingredient recognition model is updated based on the first loss value to reduce loss. This process is repeated. Eventually, after numerous training rounds, the loss becomes sufficiently small, and accuracy of the category result and the entry-exit result of the food ingredients becomes sufficiently high.

In the embodiments of the present disclosure, the first loss value of the food ingredient recognition model is calculated through the predetermined cross-entropy loss function. The first parameter of the food ingredient recognition model is adjusted according to the first loss value. The first parameter is configured to adjust the first output of the food ingredient recognition model. The first output includes the category information and the entry-exit information of the food ingredients. Therefore, the first parameter of the food ingredient recognition model can be updated through the predetermined cross-entropy loss function, improving the accuracy of the category result and the entry-exit result of the food ingredients.

In some embodiments, the food ingredient recognition method may further include following operations for training the food ingredient recognition model: calculating a second loss value of the food ingredient recognition model through a predetermined intersection-over-union regression loss function; and adjusting a second parameter of the food ingredient recognition model according to the second loss value. The second parameter is configured to adjust second output of the food ingredient recognition model. The second output includes the position information of the food ingredients.

In some embodiments, the predetermined intersection-over-union regression loss function may be used for measuring the difference between predicted data (the position information of the food ingredients) and the ground truth data. The second loss value of the food ingredient recognition model may be calculated using the intersection-over-union regression loss function, and the second parameter of the food ingredient recognition model is updated based on the second loss value to reduce the loss. This process is repeated. Eventually, after numerous training rounds, the loss becomes sufficiently small, and accuracy of the position information of the food ingredients becomes sufficiently high.

In the embodiments of the present disclosure, the second loss value of the food ingredient recognition model is calculated through the predetermined intersection-over-union regression loss function, and the second parameter of the food ingredient recognition model is adjusted according to the second loss value. The second parameter is configured to adjust the second output of the food ingredient recognition model. The second output includes the position information of the food ingredients. Therefore, the second parameter of the food ingredient recognition model can be updated through the predetermined intersection-over-union regression loss function, improving the accuracy of the position information of the food ingredients.

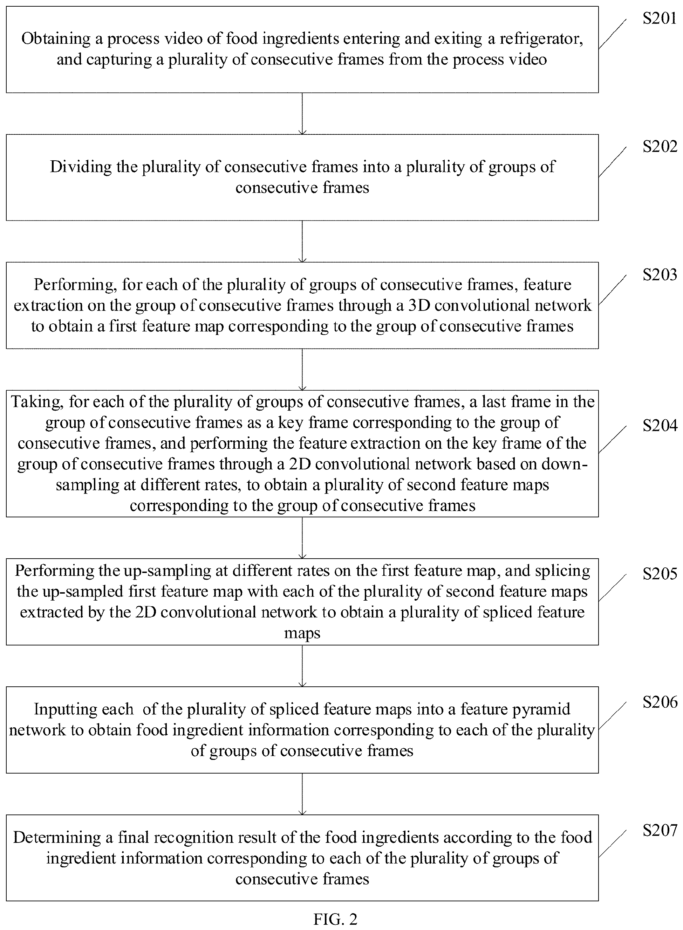

As a specific example, FIG. 2 is a schematic flowchart of a food ingredient recognition method according to a second embodiment of the present disclosure. As shown in FIG. 2, the food ingredient recognition method provided in this embodiment may include operations at steps S201 to S207.

At step S201, a process video of food ingredients entering and exiting a refrigerator is obtained, and a plurality of consecutive frames is captured from the process video.

At step S202, the plurality of consecutive frames is divided into a plurality of groups of consecutive frames.

For example, each of the plurality of groups of consecutive frames may include 16 consecutive frames.

At step S203, for each of the plurality of groups of consecutive frames, feature extraction is performed on the group of consecutive frames through a 3D convolutional network to obtain a first feature map corresponding to the group of consecutive frames.

The first feature map includes temporal information of the food ingredients.

At step S204, for each of the plurality of groups of consecutive frames, a last frame in the group of consecutive frames is taken as a key frame corresponding to the group of consecutive frames, and the feature extraction is performed on the key frame corresponding to the group of consecutive frames through a 2D convolutional network based on down-sampling at different rates, to obtain a plurality of second feature maps corresponding to the group of consecutive frames.

In some embodiments, the plurality of second feature maps includes spatial information of the food ingredients. The second feature maps obtained based on the down-sampling at different rates have different resolutions.

In some embodiments, both the 2D convolutional network and the 3D convolutional network may use lightweight networks such as Shufflenet, Mobilenet, or their variants.

At step S205, up-sampling at different rates is performed on the first feature map, and the up-sampled first feature map is spliced with each of the plurality of second feature maps extracted by the 2D convolutional network to obtain a plurality of spliced feature maps.

In some embodiments, the above splicing operation may perform preliminary fusion on the temporal information and the spatial information.

At step S206, each of the plurality of spliced feature maps is inputted into a Feature Pyramid Network to obtain food ingredient information corresponding to each of the plurality of groups of consecutive frames.

In some embodiments, to strengthen information interaction between the spliced feature maps, each spliced feature map may be inputted into the Feature Pyramid Network to strengthen fusion between features.

In some embodiments, the food ingredient information corresponding to each group of consecutive frames outputted by the Feature Pyramid Network may be (C+6)*N-dimensional prediction data, where N may represent the number of grids that an original image is divided into, i.e., N bounding boxes are obtained in the original image, and a (C+6)-dimensional vector may represent three types of prediction information. The category information of the food ingredients may be (C+1)-dimensional, where C is a total number of categories. The position information of the food ingredients may be 4-dimensional and include information of a center point (horizontal and vertical coordinates), width, and height of the bounding box. The entry-exit information of the food ingredients is 1-dimensional. For example, 1 may represent that the food ingredients enter the refrigerator, and 0 may represent that the food ingredients are taken out of the refrigerator.

In some embodiments, output of the Feature Pyramid Network may be adjusted through the predetermined loss function. In a specific implementation, the category information and the entry-exit information of the food ingredients may be adjusted through the predetermined cross-entropy loss function, and the position information of the food ingredients may be adjusted through the predetermined intersection-over-union regression loss function.

At step S207, a final recognition result of the food ingredients is determined according to the food ingredient information corresponding to each of the plurality of groups of consecutive frames.

In some embodiments, through the above embodiments, category information, position information, and entry-exit information of all objects in any group of consecutive frames in a video stream may be obtained with only one forward pass of the network. Compared with the two-stage recognition method combining object detection and object tracking, the method according to the embodiment of the present disclosure greatly reduces difficulty of food ingredient recognition using a camera deployed locally on the refrigerator. Therefore, a lightweight backbone network can be used for feature extraction to compress a model parameter as much as possible, and a lightweight model can be deployed on the camera locally on the refrigerator. That is, an execution subject of the above embodiments may be the camera locally deployed on the refrigerator. Recognizing the food ingredients via this camera locally deployed on the refrigerator makes real-time detection of an entry-exit state of the food ingredients possible, without the need for additional servers for stream transmission and detection, reducing costs.

In some embodiments, to improve recognition accuracy, the execution subject of the above embodiments may also be a server. The server uses the 3D convolutional network to extract temporal features of consecutive frames, uses the 2D convolutional network to extract spatial features of the consecutive frames, and performs the preliminary fusion on the temporal features and the spatial features to achieve the unification of the temporal information and the spatial information. Finally, the Feature Pyramid Network is used to predict an action category, position information of an object performing the action, and a category of the object. The 2D convolutional network, the 3D convolutional network, and the feature fusion method may all be dynamically adjusted to balance real-time performance and accuracy of the food ingredient recognition.

In the embodiments of the present disclosure, compared with the two-stage recognition method, the limitation of the plurality of models is broken, and the temporal information and the spatial information of the food ingredients may be obtained only through the feature extraction. Moreover, based on the temporal information and the spatial information of the food ingredients, the category information, the position information, and the entry-exit information of the food ingredients may be obtained simultaneously. In this way, the training difficulty, the training costs, and the complexity of the food ingredient recognition are greatly reduced, and the real-time speed of the food ingredient recognition is improved, improving the user experience.

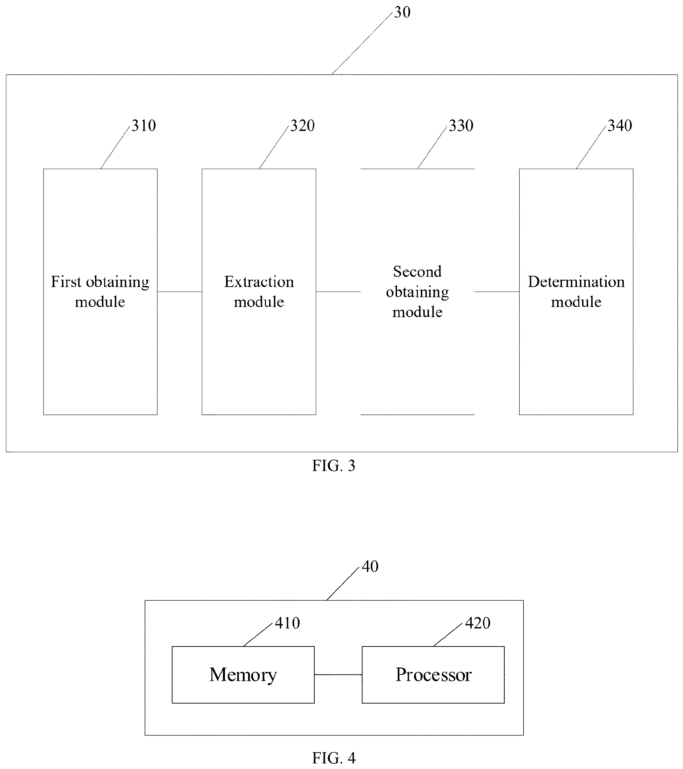

FIG. 3 is a schematic structural diagram of a food ingredient recognition apparatus according to an embodiment of the present disclosure. As shown in FIG. 3, the food ingredient recognition apparatus 30 may include: a first obtaining module 310, an extraction module 320, a second obtaining module 330, and a determination module 340.

The first obtaining module 310 may be configured to obtain a process video of food ingredients entering and exiting a refrigeration device, and capture a plurality of consecutive to-be-recognized images from the process video. The extraction module 320 may be configured to divide the plurality of consecutive to-be-recognized images into a plurality of groups of to-be-recognized images, and perform, for each of the plurality of groups of to-be-recognized images, feature extraction on the group of to-be-recognized images to obtain first feature information and second feature information corresponding to the group of to-be-recognized images. The first feature information includes temporal information of the food ingredients. The second feature information includes spatial information of the food ingredients. The second obtaining module 330 may be configured to obtain, for each of the plurality of groups of to-be-recognized images, food ingredient information corresponding to the group of to-be-recognized images according to the first feature information and the second feature information corresponding to the group of to-be-recognized images. The food ingredient information includes category information, position information, and entry-exit information of the food ingredients. The determination module 340 may be configured to determine a final recognition result of the food ingredients according to the food ingredient information corresponding to each of the plurality of groups of to-be-recognized images.

With the food ingredient recognition apparatus according to the embodiments of the present disclosure, the first obtaining module is configured to obtain the process video of the food ingredients entering and exiting the refrigeration device, and capture the plurality of consecutive to-be-recognized images from the process video. The extraction module is configured to divide the plurality of consecutive to-be-recognized images into the plurality of groups of to-be-recognized images, and perform, for each of the plurality of groups of to-be-recognized images, the feature extraction on the group of to-be-recognized images to obtain the first feature information and the second feature information corresponding to the group of to-be-recognized images. The first feature information includes the temporal information of the food ingredients, and the second feature information includes the spatial information of the food ingredients. The second obtaining module is configured to obtain, for each of the plurality of groups of to-be-recognized images, the food ingredient information corresponding to the group of to-be-recognized images according to the first feature information and the second feature information corresponding to the group of to-be-recognized images. The food ingredient information includes the category information, the position information, and the entry-exit information of the food ingredients. The determination module is configured to determine the final recognition result of the food ingredients according to the food ingredient information corresponding to each of the plurality of groups of to-be-recognized images. Therefore, compared with the two-stage recognition method, the limitation of the plurality of models is broken, and the temporal information and the spatial information of the food ingredients can be obtained only through the feature extraction. Moreover, based on the temporal information and the spatial information of the food ingredients, the category information, the position information, and the entry-exit information can be obtained simultaneously. In this way, the training difficulty, the training costs, and the complexity of the food ingredient recognition are greatly reduced, and the real-time speed of the food ingredient recognition is improved, improving the user experience.

According to an embodiment of the present disclosure, the extraction module 320 may be specifically configured to: perform, for each of the plurality of groups of to-be-recognized images, the feature extraction on the group of to-be-recognized images through a 3D convolutional network model to obtain the first feature information corresponding to the group of to-be-recognized images.

According to an embodiment of the present disclosure, the extraction module 320 may be specifically configured to: perform, for each of the plurality of groups of to-be-recognized images, the feature extraction on a last to-be-recognized image in the group of to-be-recognized images through a 2D convolutional network model to obtain the second feature information corresponding to the group of to-be-recognized images.

According to an embodiment of the present disclosure, the second obtaining module 330 may be specifically configured to: perform, for each of the plurality of groups of to-be-recognized images, feature fusion on the first feature information and the second feature information corresponding to the group of to-be-recognized images to obtain fused feature information corresponding to the group of to-be-recognized images; and obtain, for each of the plurality of groups of to-be-recognized images, the food ingredient information corresponding to the group of to-be-recognized images according to the fused feature information corresponding to the group of to-be-recognized images.

According to an embodiment of the present disclosure, the second obtaining module 330 may be specifically configured to: input, for each of the plurality of groups of to-be-recognized images, the fused feature information corresponding to the group of to-be-recognized images into a pre-trained food ingredient recognition model to obtain the food ingredient information corresponding to the group of to-be-recognized images. The food ingredient recognition model is obtained based on training samples labeled with category information, position information, and entry-exit information of food ingredients corresponding to a plurality of sample images.

According to an embodiment of the present disclosure, the food ingredient recognition apparatus 30 may further include a training module (not shown). The training module is configured to: calculate a first loss value of the food ingredient recognition model through a predetermined cross-entropy loss function; and adjust a first parameter of the food ingredient recognition model according to the first loss value. The first parameter is configured to adjust first output of the food ingredient recognition model. The first output includes the category information and the entry-exit information of the food ingredients.

According to an embodiment of the present disclosure, the training module is further configured to: calculate a second loss value of the food ingredient recognition model through a predetermined intersection-over-union regression loss function; and adjust a second parameter of the food ingredient recognition model according to the second loss value. The second parameter is configured to adjust second output of the food ingredient recognition model. The second output includes the position information of the food ingredients.

In addition, corresponding to the food ingredient recognition method provided in the above embodiments, an embodiment of the present disclosure further provides an electronic device. As shown in FIG. 4, the electronic device 40 may include: a memory 410, a processor 420, and a program stored on the memory 410 and executable on the processor 420. The processor 420, when executing the program, implements all steps of the food ingredient recognition method according to the embodiments of the present disclosure.

In the above electronic device, the process video of the food ingredients entering and exiting the refrigeration device is obtained, and the plurality of consecutive to-be-recognized images is captured from the process video. The plurality of consecutive to-be-recognized images is divided into the plurality of groups of to-be-recognized images. For each of the plurality of groups of to-be-recognized images, the feature extraction is performed on the group of to-be-recognized images to obtain the first feature information and the second feature information corresponding to the group of to-be-recognized images. The first feature information includes the temporal information of the food ingredients, and the second feature information includes the spatial information of the food ingredients. For each of the plurality of groups of to-be-recognized images, the food ingredient information corresponding to the group of to-be-recognized images is obtained according to the first feature information and the second feature information corresponding to the group of to-be-recognized images. The food ingredient information includes the category information, the position information, and the entry-exit information of the food ingredients. The final recognition result of the food ingredients is determined according to the food ingredient information corresponding to each of the plurality of groups of to-be-recognized images. Therefore, compared with the two-stage recognition method, the limitation of the plurality of models is broken, and the temporal information and the spatial information of the food ingredients can be obtained only through the feature extraction. Moreover, based on the temporal information and the spatial information of the food ingredients, the category information, the position information, and the entry-exit information can be obtained simultaneously. In this way, the training difficulty, the training costs, and the complexity of the food ingredient recognition are greatly reduced, and the real-time speed of the food ingredient recognition is improved, improving the user experience.

In addition, corresponding to the food ingredient recognition method provided in the above embodiments, an embodiment of the present disclosure further provides a computer-readable storage medium, having a program stored thereon. The program, when executed by a processor, implements all steps of the food ingredient recognition method according to the embodiments of the present disclosure.

In the above computer-readable storage medium, the process video of the food ingredients entering and exiting the refrigeration device is obtained, and the plurality of consecutive to-be-recognized images is captured from the process video. The plurality of consecutive to-be-recognized images is divided into the plurality of groups of to-be-recognized images. For each of the plurality of groups of to-be-recognized images, the feature extraction is performed on the group of to-be-recognized images to obtain the first feature information and the second feature information corresponding to the group of to-be-recognized images. The first feature information includes the temporal information of the food ingredients, and the second feature information includes the spatial information of the food ingredients. For each of the plurality of groups of to-be-recognized images, the food ingredient information corresponding to the group of to-be-recognized images is obtained according to the first feature information and the second feature information corresponding to the group of to-be-recognized images. The food ingredient information includes the category information, the position information, and the entry-exit information of the food ingredients. The final recognition result of the food ingredients is determined according to the food ingredient information corresponding to each of the plurality of groups of to-be-recognized images. Therefore, compared with the two-stage recognition method, the limitation of the plurality of models is broken, and the temporal information and the spatial information of the food ingredients can be obtained only through the feature extraction. Moreover, based on the temporal information and the spatial information of the food ingredients, the category information, the position information, and the entry-exit information can be obtained simultaneously. In this way, the training difficulty, the training costs, and the complexity of the food ingredient recognition are greatly reduced, and the real-time speed of the food ingredient recognition is improved, improving the user experience.

It needs to be noted that, the logic and/or step described in other manners herein or shown in the flowchart, for example, a particular sequence table of executable instructions for realizing the logical function, may be specifically realized in any computer readable medium to be used by the instruction execution system, device or equipment (such as the system based on computers, the system including processors or other systems capable of obtaining the instructions from the instruction execution system, device and equipment and executing the instructions), or to be used in combination with the instruction execution system, device and equipment. As to the specification, "the computer readable medium" may be any device adaptive for including, storing, communicating, propagating or transferring programs to be used by or in combination with the instruction execution system, device or equipment. More specific examples of the computer readable medium include but are not limited to: an electronic connection (an electronic device) with one or N wires, a portable computer disk case (a magnetic device), a random access memory (RAM), a read only memory (ROM), an erasable programmable read-only memory (EPROM or a flash memory), an optical fiber device and a portable compact disk read-only memory (CDROM). In addition, the computer readable medium may even be a paper or other appropriate medium capable of being printed with programs thereon, this is because, for example, the paper or other appropriate medium may be optically scanned and then edited, decrypted or processed with other appropriate methods when necessary to obtain the programs in an electric manner, and then the programs may be stored in the computer memory.

It should be understood that each part of the present disclosure may be realized by the hardware, software, firmware, or their combination. In the above embodiments, a plurality of steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

In the description of this specification, descriptions with reference to the terms "an embodiment", "some embodiments", "examples", "specific examples", or "some examples" etc., mean that specific features, structure, materials or characteristics described in conjunction with the embodiment or example are included in at least one embodiment or example of the present disclosure. In this specification, the schematic representations of the above terms do not necessarily refer to the same embodiment or example. Moreover, the described specific features, structures, materials or characteristics may be combined in any one or more embodiments or examples in a suitable manner.

In addition, the terms "first" and "second" are only used for descriptive purposes, and cannot be understood as indicating or implying relative importance or implicitly indicating the number of indicated technical features. Therefore, the features associated with "first" and "second" may explicitly or implicitly include at least one of the features. In the description of the present disclosure, "plurality of" means at least two, such as two, three, etc., unless otherwise specifically defined.

In the present disclosure, unless otherwise clearly specified and limited, terms such as "install", "connect", "connect to", "fix", and the like should be understood in a broad sense. For example, it may be a fixed connection or a detachable connection or connection as one piece; mechanical connection or electrical connection; direct connection or indirect connection through an intermediate; internal communication of two components or the interaction relationship between two components. For those skilled in the art, the specific meaning of the above-mentioned terms in the present disclosure can be understood according to specific circumstances.

Although the embodiments according to the present disclosure have been shown and described, it would be appreciated by those skilled in the art that the above embodiments are illustrative and cannot be construed to limitation on the present disclosure, and changes, alternatives, modifications, and variations can be made in the embodiments without departing from scope of the present disclosure.

## Claims

1. A food ingredient recognition method, comprising:
obtaining a process video of food ingredients entering and exiting a refrigeration device, and capturing a plurality of consecutive to-be-recognized images from the process video;
dividing the plurality of consecutive to-be-recognized images into a plurality of groups of to-be-recognized images, and performing, for each of the plurality of groups of to-be-recognized images, feature extraction on the group of to-be-recognized images to obtain first feature information and second feature information corresponding to the group of to-be-recognized images, wherein the first feature information comprises temporal information of the food ingredients, and the second feature information comprises spatial information of the food ingredients;
obtaining, for each of the plurality of groups of to-be-recognized images, food ingredient information corresponding to the group of to-be-recognized images according to the first feature information and the second feature information corresponding to the group of to-be-recognized images, wherein the food ingredient information comprises category information, position information, and entry-exit information of the food ingredients; and
determining a final recognition result of the food ingredients according to the food ingredient information corresponding to each of the plurality of groups of to-be-recognized images.

2. The method according to claim 1, wherein said performing, for each of the plurality of groups of to-be-recognized images, the feature extraction on the group of to-be-recognized images to obtain the first feature information corresponding to the group of to-be-recognized images comprises:
performing, for each of the plurality of groups of to-be-recognized images, feature extraction on the group of to-be-recognized images through a 3D convolutional network model to obtain the first feature information corresponding to the group of to-be-recognized images.

3. The method according to claim 1, wherein said performing, for each of the plurality of groups of to-be-recognized images, the feature extraction on the group of to-be-recognized images to obtain the second feature information corresponding to the group of to-be-recognized images comprises:
performing, for each of the plurality of groups of to-be-recognized images, feature extraction on a last to-be-recognized image in the group of to-be-recognized images through a 2D convolutional network model to obtain the second feature information corresponding to the group of to-be-recognized images.

4. The method according to any one of claims 1 to 3, wherein said obtaining, for each of the plurality of groups of to-be-recognized images, the food ingredient information corresponding to the group of to-be-recognized images according to the first feature information and the second feature information corresponding to the group of to-be-recognized images comprises:
performing, for each of the plurality of groups of to-be-recognized images, feature fusion on the first feature information and the second feature information corresponding to the group of to-be-recognized images to obtain fused feature information corresponding to the group of to-be-recognized images; and
obtaining, for each of the plurality of groups of to-be-recognized images, the food ingredient information corresponding to the group of to-be-recognized images according to the fused feature information corresponding to the group of to-be-recognized images.

5. The method according to claim 4, wherein said obtaining, for each of the plurality of groups of to-be-recognized images, the food ingredient information corresponding to the group of to-be-recognized images according to the fused feature information corresponding to the group of to-be-recognized images comprises:
inputting, for each of the plurality of groups of to-be-recognized images, the fused feature information corresponding to the group of to-be-recognized images into a pre-trained food ingredient recognition model to obtain the food ingredient information corresponding to the group of to-be-recognized images, the food ingredient recognition model being obtained based on training samples labeled with category information, position information, and entry-exit information of food ingredients corresponding to a plurality of sample images.

6. The method according to claim 5, wherein, when training the food ingredient recognition model, the method further comprises:
calculating a first loss value of the food ingredient recognition model through a predetermined cross-entropy loss function; and
adjusting a first parameter of the food ingredient recognition model according to the first loss value, wherein the first parameter is configured to adjust first output of the food ingredient recognition model, wherein the first output comprises the category information and the entry-exit information of the food ingredients.

7. The method according to claim 5, wherein, when training the food ingredient recognition model, the method further comprises:
calculating a second loss value of the food ingredient recognition model through a predetermined intersection-over-union regression loss function; and
adjusting a second parameter of the food ingredient recognition model according to the second loss value, wherein the second parameter is configured to adjust second output of the food ingredient recognition model, wherein the second output comprises the position information of the food ingredients.

8. A food ingredient recognition apparatus, comprising:
a first obtaining module configured to obtain a process video of food ingredients entering and exiting a refrigeration device, and capture a plurality of consecutive to-be-recognized images from the process video;
an extraction module configured to divide the plurality of consecutive to-be-recognized images into a plurality of groups of to-be-recognized images, and perform, for each of the plurality of groups of to-be-recognized images, feature extraction on the group of to-be-recognized images to obtain first feature information and second feature information corresponding to the group of to-be-recognized images, wherein the first feature information comprises temporal information of the food ingredients, and the second feature information comprises spatial information of the food ingredients;
a second obtaining module configured to obtain, for each of the plurality of groups of to-be-recognized images, food ingredient information corresponding to the group of to-be-recognized images according to the first feature information and the second feature information corresponding to the group of to-be-recognized images, wherein the food ingredient information comprises category information, position information, and entry-exit information of the food ingredients; and
a determination module configured to determine a final recognition result of the food ingredients according to the food ingredient information corresponding to each of the plurality of groups of to-be-recognized images.

9. An electronic device, comprising:
a memory;
a processor; and
a program stored on the memory and executable on the processor, wherein the processor, when executing the program, implements the method according to any one of claims 1 to 7.

10. A computer-readable storage medium, having a program stored thereon, wherein the program, when executed by a processor, implements the method according to any one of claims 1 to 7.
